# EUROPÄISCHE PATENTSCHRIFT

(11) **EP 0 399 521 B1**
(45) Veröffentlichungstag und Bekanntmachung des Hinweises auf die Patenterteilung: **27.07.1994**
(21) Anmeldenummer: 90109860.8
(22) Anmeldetag: 23.05.1990
(51) Int. Cl.: C22B 3/28, C01B 25/238, C01B 25/46

(54) **Verbessertes Verfahren zum Entfernen von Cadmium-Ionen aus Nassverfahrensphosphorsäure**
Process for extracting cadmium-ions from wet process phosphoric acid
Procédé d'extraction d'ions cadmium hors d'acide phosphorique de voie humide

(30) Priorität: 26.05.1989 DE 3917189
(43) Veröffentlichungstag der Anmeldung: 28.11.1990
(73) Patentinhaber: Chemische Fabrik Budenheim Rudolf A. Oetker, D-55257 Budenheim (DE)
(72) Erfinder: Frankenfeld, Klaus, Dr., D-6257 Hünfelden 1 (DE); Beltz, Klaus, Dr., D-6501 Budenheim (DE); Eich, Gerhard, D-6507 Ingelheim (DE); Endrich, Klaus, Dr., D-6500 Mainz-Finthen (DE)
(74) Vertreter: Weinhold, Peter, Dr.

(56) Entgegenhaltungen:
- DE-A- 3 218 599
- DE-A- 3 327 394
- GB-A- 1 053 929
- CHEMICAL ABSTRACTS, Band 110, Nr. 16, 17. April 1989, Seite 170,Zusammenfassung Nr. 138111h, Columbus, Ohio, US;
- HYDROMETALLURGY, Band 14, Nr. 2, Juli 1985, Seiten 231-255; S. STENSTRÖM et al.: "Extraction of cadmium from phosphoric acid solutions with amines. Part. 1.Extractant selection, stripping, scrubbing and effects of other components"

## Beschreibung

Die vorliegende Erfindung beschreibt ein Verfahren zur Entfernung von Cadmium-Ionen aus Naßverfahrensphosphorsäure, insbesondere Naßverfahrensphosphorsäure, die durch den Aufschluß von Rohphosphaterzen mit Schwefelsäure gewonnen wurde, durch Flüssig-Flüssig-Extraktion unter Verwendung von Salzen der Alkylamine oder Ammoniumbasen mit anionischen Chlorokomplexen mehrwertiger Metallionen, die in einem inerten organischen Lösungsmittel gelöst sind.

Cadmium gehört zu den Schwermetallen, deren Verbreitung man vermindern will. Rohphosphaterze, die für die Herstellung von phosphathaltigen Düngemitteln verwendet werden, enthalten Cadmium. Durch den Aufschluß der Rohphosphate mit Schwefelsäure gelangt dieses Cadmium in Form eines leichtlöslichen Salzes in die produzierte Phosphorsäure und bei der Weiterverarbeitung derselben zu Düngemitteln auch in diese Düngemittel.

Es gibt Unterschiede im Cadmiumgehalt der einzelnen Rohphosphaterze. Es hat nicht an Versuchen gefehlt, den Cadmiumgehalt in den Rohphosphorsäuren zu vermindern, die aus Rohphosphaterzen mit hohem Cadmiumgehalt hergestellt werden.

Die Entfernung des Cadmiums aus einer Rohphosphorsäure bereitet jedoch erhebliche Schwierigkeiten. Cadmiumsalze zeichnen sich durch eine sehr gute Löslichkeit, insbesondere in höher konzentrierten Säuren, aus.

Cadmium wird üblicherweise aus schwach sauren, wäßrigen Lösungen durch Behandlung mit Schwefelwasserstoff als schwer-lösliches Sulfid ausgefällt.

Gemäß der DE-OS 24 22 902 ist es möglich, aus höher konzentrierten Phosphorsäuren mit einem P₂O₅-Gehalt von mehr als 45 Gew.-% unter einem Überdruck von bis zu 50 at und einer Verweilzeit bis zu 3 Stunden Cadmium aus Phosphorsäure auszufällen. Die Beispiele dieser DE-OS zeigen, daß am Ende der Behandlung noch ca. 10 bis 20 % des ursprünglich vorhandenen Cadmiums in der Säure verbleiben. Demgemäß führt dieses Verfahren zwar zu einer Verminderung des Cadmiumgehalts, nicht aber zu einer praktisch vollständigen Entfernung des Cadmiums aus der Phosphorsäure.

Es ist auch möglich, Cadmium durch Extraktion mit organischen Lösungsmitteln aus Rohphosphorsäuren zu entfernen. Die Vielzahl der bekannten Rohphosphorsäure-Reinigungsverfahren zeigen dazu technische Möglichkeiten auf. Bei diesen Verfahren wird eine reine Phosphorsäure gewonnen, in der neben dem Cadmium auch alle anderen Kationen aus der Phosphorsäure weitgehend entfernt sind. Die Säuren sind in ihrer Reinheit vergleichbar mit der thermischen Phosphorsäure. Durch die hohen Anforderungen an die Qualität sind diese Verfahren jedoch aufwendig und sehr kostenintensiv. Die so gewonnenen Reinsäuren können aus Preisgründen im allgemeinen nicht für die Herstellung von Düngemitteln verwendet werden.

Die GB-PS 1 053 929 beschreibt ein Verfahren zur Entfernung von Eisen aus Phosphorsäure mit Hilfe von primären, sekundären oder tertiären Aminen, die in einem Kohlenwasserstoff-Lösungsmittel gelöst sind. Diesem Verfahren werden Phosphorsäurelösungen unterzogen, die durch Phosphaterzaufschluß mit HCl gewonnen wurden. Das Eisen wird dabei in Form eines anionischen Chlorokomplexes entfernt.

Die DE-OS 32 18 599 beschreibt ein Extraktionsverfahren zum Entfernen von Cadmium aus sauren, insbesondere P₂O₅-haltigen Lösungen. Als Extraktionsmittel werden Aminsalze der Halogenwasserstoffsäuren, insbesondere der Salzsäure, die in einem organischen Lösungsmittel gelöst sind, verwendet. Als Reextraktionsmittel werden Wasser oder wäßrige Lösungen von Salzen der Sauerstoffsäuren, insbesondere von Ammoniumsalzen der Sauerstoffsäuren, im schwach sauren bis neutralen pH-Bereich eingesetzt.

Dieses Verfahren wird als mehrstufiger Gegenstrom-Extraktionsprozeß betrieben. Für die Extraktionsstufe sind üblicherweise vier Gegenstrom-Extraktionseinheiten und für die Reextraktionsstufe drei Gegenstrom-Extraktionseinheiten erforderlich. Für die Reagenzbereitung werden weitere zwei Extraktionseinheiten benötigt. Die Vielzahl der erforderlichen Extraktionseinheiten führt demgemäß zu einem hohen technischen Aufwand, verbunden mit einem hohen Investitionsbedarf.

Aufgabe der vorliegenden Erfindung ist es demgemäß, ein verbessertes Verfahren zur Entfernung von Cadmium-Ionen aus Naßverfahrensphosphorsäure zur Verfügung zu stellen, das technologisch einfacher und kostengünstiger durch geführt werden kann als die bisher bekannten Verfahren. Insbesondere soll dieses Verfahren gestatten, aus Naßverfahrensphosphorsäure mit einer Konzentration von vorzugsweise ungefähr 28 bis ungefähr 58 Gew.-% P₂O₅ gezielt und möglichst selektiv das vorhandene Cadmium zu entfernen, ohne das Qualitätsniveau, insbesondere den Gehalt an und die Zusammensetzung der anderen darin enthaltenen Begleitstoffe der Naßverfahrensphosphorsäure wesentlich zu verändern. Vorzugsweise soll nach Beendigung der Extraktion dar Gesamtgehalt an Metallkationen in der Phosphorsäure sich um weniger als 10, insbesondere weniger als 5 %, vom Gesamtgehalt an Kationen vor der Extraktion unterscheiden. Demgegenüber soll die Extraktion zu der Entfernung von vorzugsweise wenigstens 90, insbesondere wenigstens 95 %, der ursprünglich vorhandenen Cadmium-Ionen führen.

Es wurde nun überraschend gefunden, daß die obige Aufgabe durch die Verwendung von Salzen, die aus anionischen Chlorokomplexen von mehrwertigen Metallen und von organischen Aminen abgeleiteten Kationen bzw. quaternären Ammoniumbasen aufgebaut sind, in sehr zufriedenstellender Weise gelöst werden kann.

Unerwarteterweise haben die in einem inerten organischen Lösungsmittel vorliegenden und darin gelösten Salze aus organischen Aminkationen bzw. quaternären Ammoniumbasen, die als Gegenionen anionische Chlorokomplexe von von Cadmium verschiedenen mehrwertigen Metallen aufweisen, die Eigenschaft, die praktisch selektive Extraktion von Cadmium-Ionen aus Naßverfahrensphosphorsäuren stark zu begünstigen, wobei das Cadmium in Form eines anionischen Chlorokomplexes in der organischen Lösungsmittelphase festgehalten wird.

Zusätzlich wurde überraschenderweise gefunden, daß die resultierenden, in einem inerten organischen Lösungsmittel gelösten Cadmium-Komplexsalze von Aminen oder quaternären Ammoniumbasen bei der Behandlung der organischen Phase mit einer sauren, wäßrigen Lösung, die anionische Chlorokomplexe mehrwertiger Metalle enthält, gegen die letztgenannten Chlorokomplexe, insbesondere diejenigen von Zink(II) und Eisen(III), ausgetauscht werden und das Cadmium dabei in die saure, wäßrige Lösung überführt wird.

Dieses überraschende Extraktionsverhalten des Cadmiums in Form eines anionischen Chlorokomplex-Salzes mit organischen Aminkationen oder quaternären Ammoniumbasen läßt sich für die Bereitstellung eines einfachen Flüssig-Flüssig-Extraktionsverfahrens zur Entfernung von Cadmium-Ionen aus Naßverfahrensphosphorsäure ausnutzen, das zur kontinuierlichen Betriebsweise nur eine Extraktions- und eine Reextraktionsstufe benötigt, was offensichtlich einen beträchtlichen wirtschaftlichen und verfahrenstechnischen Vorteil darstellt.

Überraschenderweise wurde schließlich auch noch festgestellt, daß man aus der resultierenden, mit Cadmium beladenen wäßrigen Reextraktlösung durch geeignete Behandlung derselben ohne Zusatz weiterer Chemikalien die für die Extraktions- bzw. Reextraktionsstufe benötigten Chemikalien zurückgewinnen kann und dabei das Cadmium in Form eines leicht abtrennbaren Feststoffs anfällt, so daß sich das erfindungsgemäße Extraktionsverfahren zum einen mit minimalem Verbrauch an Chemikalien und zum anderen unter Erhalt des abgetrennten Cadmiums in problemlos deponierbarer Form durchführen läßt.

Gegenstand der vorliegenden Erfindung ist demnach ein Verfahren zur Entfernung von Cadmium-Ionen aus Naßverfahrensphosphorsäure durch Flüssig-Flüssig-Extraktion, bei dem man die Naßverfahrensphosphorsäure mit mindestens einem in einem mit Wasser, wäßrigen Salzlösungen und wäßrigen nicht mischbaren organischen Lösungsmittel in gelöster Form vorliegenden Salz, das aus Salzen organischer primärer, sekundärer und tertiärer Amine und quaternären Ammoniumsalzen ausgewählt ist, in Kontakt bringt und die die extrahierten Cadmium-Ionen enthaltende organische Lösungsmittelphase darauf von der Naßverfahrensphosphorsäure abtrennt, das dadurch gekennzeichnet ist, daß es sich bei den obigen Amin- bzw. Ammoniumsalzen um solche handelt, die als Anionen Chlorokomplexe eines oder mehrerer von Cadmium verschiedener mehrwertiger Metalle aufweisen.

Gemäß einer besonders bevorzugten Ausführungsform des erfindungsgemäßen Verfahrens wird die von der Naßverfahrensphosphorsäure abgetrennte, die extrahierten Cadmium-Ionen enthaltende organische Lösungsmittelphase mit einer sauren, wäßrigen Lösung behandelt, die anionische Chlorokomplexe eines oder mehrerer von Cadmium verschiedener mehrwertiger Metalle enthält, um die Cadmium-Ionen aus der isolierten organischen Phase durch Verdrängung des anionischen Cadmium-Chlorokomplexes aus der organischen Phase mit Hilfe der Chlorokomplexe der von Cadmium verschiedenen mehrwertigen Metalle zu reextrahieren. Nach der Reextraktion kann die nun mit Chlorokomplexen von von Cadmium verschiedenen mehrwertigen Metallen beladene organische Phase wieder zum Extraktionsverfahren zurückgeführt werden, während die resultierende wäßrige Phase vorzugsweise in der weiter unten näher beschriebenen Art und Weise aufgearbeitet wird.

Das erfindungsgemäße Extraktionsverfahren eignet sich insbesondere für Naßverfahrensphosphorsäuren, die durch Aufschluß mit Schwefelsäure aus Rohphosphaten hergestellt wurden. Es ist wenig geeignet für Phosphorsäuren, die durch Aufschluß mit Salzsäure oder Salpetersäure gewonnen wurden und noch Chloride oder Nitrate als wesentliche Bestandteile enthalten. Unter "wesentlicher Bestandteil" wird hier ein Nitratgehalt von über etwa 2 Gew.-%, insbesondere über etwa 1 Gew.-%, und ein Chloridgehalt von über etwa 2 Gew.-%, insbesondere über etwa 1 Gew.-%, verstanden.

Auch Naßverfahrensphosphorsäuren, die durch Aufschluß mit Schwefelsäure gewonnen wurden, können in geringem Umfang Chlorid-Ionen enthalten, die ihren Ursprung in den Phosphaterzen oder im Chloridgehalt des Prozeßwassers beim Aufschluß haben. Der Chloridgehalt ist weiterhin von der P₂O₅-Konzentration abhängig, da bei der Aufkonzentrierung der Filtersäure HCl als leicht flüchtige Komponente aus der Phosphorsäure entfernt wird. Der Chloridgehalt in derartigen Säuren liegt in der Regel im Bereich von 0,005 bis 0,3 Gew.-% und wirkt sich weder störend noch fördernd auf das erfindungsgemäße Verfahren aus. Von der Schwefelsäure oder den löslichen Sulfat-Ionen, die in der Naßverfahrenssäure vorhanden sind, gehen keine Störungen auf das erfindungsgemäße Verfahren aus.

Somit weisen die erfindungsgemäß zur Herstellung der obigen Salze geeigneten organischen Stickstoffverbindungen vorzugsweise Kohlenwasserstoffreste mit 1 bis 30, insbesondere 1 bis 18, C-Atomen auf. Bei Verwendung von erfindungsgemäß bevorzugten sekundären und tertiären Aminen bzw. quaternären Ammoniumbasen können die Kohlenwasserstoffreste gleich oder verschieden sein. Besonders bevorzugt ist es, wenn wenigstens einer der an den Stickstoff gebundenen Kohlenwasserstoffreste wenigstens 6, insbesondere wenigstens 8, Kohlenstoffatome aufweist. Bei den Kohlenwasserstoffresten handelt es sich bevorzugt um Aralkylgruppen und/oder Alkylgruppen, von denen die letzteren besonders bevorzugt sind. Beispiele für längerkettige Kohlenwasserstoffe, die an das Stickstoffatom gebunden sein können, sind insbesondere Octyl, Nonyl Decyl, Undecyl , Tetradecyl , Hexadecyl und Octadecyl sowie Benzyl.

Unter den quaternären Ammoniumbasen werden insbesondere solche bevorzugt, die 3 Alkylreste mit jeweils 8 bis 10 Kohlenstoffatomen und als vierten Alkylrest eine Methylgruppe tragen.

Die primären, sekundären und tertiären Amine sowie die quaternären Ammoniumbasen werden als handelsübliche Chemikalien von verschiedenen Herstellern produziert und sind unter verschiedenen Produktbezeichnungen im Handel erhältlich.

Konkrete Beispiele für erfindungsgemäß geeignete Amine und Ammoniumsalze sind die folgenden:
Dioctylamin, Diisooctylamin, Dinonylamin, Diisononylamin, Di-n-decylamin, Diisodecylamin, Di-n-undecylamin, Di-n-dodecylamin, Di(2-butyloctyl)-amin, Di(1-isobutyl-3,5-dimethylhexyl)-amin, Tri-n-octylamin, Tri-isooctylamin, Methyldioctylamin, Tri-n-nonylamin, N-Butyl-N,N-di-n-dodecylamin, N-N-Dimethyl-N-octadecylamin, Tri-tetradecylamin, Tri-hexadecylamin, Tribenzylamin, Tri-n-octylmethylammoniumchlorid, Tri-isooctylmethylammoniumchlorid, Tri-n-nonylmethylammoniumchlorid, Tri-isononylmethylammoniumchlorid, Tri-n-decylmethylammoniumchlorid und Tri-n-dodecylmethylammoniumchlorid.

Selbstverständlich können zur Herstellung der erfindungsgemäß verwendeten Salze auch Gemische aus zwei oder mehreren der obigen Amine und quaternären Ammoniumsalze eingesetzt werden.

Bei den erfindungsgemäß verwendeten Salzen können die anionischen Chlorokomplexe verschiedene mehrwertige Metalle umfassen. Prinzipiell kommen hierfür alle Elemente infrage, die die Fähigkeit zur Ausbildung von Chlorokomplexen in sauren, wäßrigen Systemen haben. Hierfür sind die Elemente Zink, Kupfer, Kobalt, Blei, Eisen, Gold, Ruthenium, Palladium, Platin und Osmium geeignet. Erfindungsgemäß bevorzugt sind dabei die Chlorokomplexe von Eisen, Zink und Kupfer.

Naßverfahrensphosphorsäuren stellen Vielstoffsysteme dar. Sie enthalten alle Anionen und Kationen aus den ihnen zugrunde liegenden Rohphosphaten, die nach dem Schwefelsäureaufschluß in Form löslicher Verbindungen in der Phosphorsäure vorliegen.

Besonders bevorzugt werden im erfindungsgemäßen Verfahren nur die Metalle zur Ausbildung des Chlorokomplexes verwendet, die in der Naßverfahrensphosphorsäure bereits als Nebenbestandteil in nennenswerter Konzentration vorliegen, d.h. die Elemente Zink und Eisen. Bei der Extraktion der Cadmium-Ionen aus der Naßverfahrensphosphorsäure wird damit eine Veränderung der stofflichen Zusammensetzung der behandelten Phosphorsäure, bedingt durch den Austausch des mehrwertigen Metallions gegen Cadmium im anionischen Chlorokomplex, weitgehend vermieden.

Bezogen auf den Cadmium-Gehalt liegen die anderen Metallionen in der Rohphosphorsäure größenordnungsmäßig in der ca. 1000-fachen Menge vor. Es ist deshalb völlig unerwartet, daß in Gegenwart eines derartigen Überschusses an den verschiedensten Metallionen die Extraktion des Cadmiums störungsfrei und im wesentlichen selektiv verläuft.

Zusätzlich kann die Selektivität hinsichtlich der Extraktion der Cadmium-Ionen aus Naßverfahrensphosphorsäure noch gesteigert werden, wenn man eine organische Lösungsmittelphase einsetzt, die eine Mischung der Salze des Zink-II-Chlorokomplexes und des Eisen-III-Chlorokomplexes mit den obigen sekundären und/oder tertiären Aminen und/oder quaternären Ammoniumbasen enthält.

Von den in der Naßverfahrensphosphorsäure vorliegenden Metallionen haben nur die Cadmium- und Zink-Ionen die Fähigkeit, aus den in der organischen Phase vorhandenen Chlorokomplex-Salzen, insbesondere aus dem Eisen-III-Chlorokomplex, die mehrwertigen Metallionen zu verdrängen und dabei selbst in der organischen Lösungsmittelphase zu verbleiben. Bei der Verwendung einer Mischung aus den Salzen des Zink-II-Chlorokomplexes und des Eisen-III-Chlorokomplexes ist die organische Lösungsmittelphase mit Zink- und Eisen-Ionen soweit vorbeladen, daß nur noch Cadmium-Ionen aus der Naßverfahrensphosphorsäure extrahiert werden können, so daß die quantitative Zusammensetzung hinsichtliche der Elemente Zink und Eisen durch den Extraktionsprozeß nur soweit verändert wird, wie dies durch die extrahierte Cadmiummenge bedingt ist.

Als Solventien für das erfindunsgemäße Verfahren eignen sich prinzipiell alle organischen Lösungsmittel, die mit Wasser, wäßrigen, sauren Salzlösungen oder mit wäßrigen konzentrierten Säuren nicht mischbar sind und nicht reagieren, sowie eine ausreichende Löslichkeit für die erfindungsgemäß verwendeten Chlorokomplex-Metallsalze haben.

Unter Berücksichtigung dieser Auswahlkriterien werden aliphatische Kohlenwasserstoffe, aromatische Kohlenwasserstoffe und Halogen-Kohlenwasserstoffe oder Mischungen derselben erfindungsgemäß als organische Lösungsmittel bevorzugt. Diese Lösungsmittel sollten naturgemäß unter den für das erfindungsgemäße Extraktionsverfahren verwendeten Druck- und Temperaturbedingungen flüssig sein und keinen allzu hohen Dampfdruck aufweisen. Beispiele für besonders bevorzugte organische Lösungsmittel sind: Toluol, Xyol, aliphatische Kohlenwasserstoff-Fraktionen mit geeignetem Siedepunktsbereich, Gemische oder Verschnitte von aromatischen sowie aromatischen und aliphatischen Kohlenwasserstoffen, Chloroform und Trichloretylen sowie Mischungen der soeben genannten Lösungsmittel. Um den Verlust an Lösungsmittel möglichst gering zu halten, werden Lösungsmittel bzw. Lösungsmittelgemische mit einem Siedepunkt von mehr als 100 °C bevorzugt.

Die saure, wäßrige Lösung, die den Chlorokomplex des mehrwertigen Metalls, insbesondere Eisen und/oder Zink, als freie Säure enthält, hat vorzugsweise einen Gesamt-Chloridgehalt von ungefähr 2 bis ungefähr 58 Gew.-%, insbesondere ungefähr 3 bis ungefähr 40 Gew.-%. Der Gesamtgehalt an freier Chlorwasserstoffsäure beträgt vorzugsweise ungefähr 2 bis ungefähr 32 Gew.-%. Die sich aus der Differenz zwischen Gesamtchlorid und Chlorwasserstoffsäure ergebenden Chloridanteile liegen in an mehrwertige Metallionen und Alkali-Ionen gebundener Form vor.

Eine saure,wäßrige Lösung, die zwar den Eisen-III-Chlorokomplex, aber keinen Zink-II-Chlorokomplex enthält, weist vorzugsweise einen Eisengehalt im Bereich von ungefähr 0,01 bis ungefähr 24 Gew.-%, insbesondere 0,05 bis 10 Gew.-%, auf. Besonders bevorzugt wird in diesem Fall ein Eisengehalt von 0,1 bis 5 Gew.-%.

Eine saure, wäßrige Lösung, die zwar den Zink-II-Chlorokomplex, aber keinen Eisen-III-Chlorokomplex enthält, weist vorzugsweise einen Zinkgehalt im Bereich von ungefähr 0,01 bis 38 Gew.-%, insbesondere 0,05 bis 10 Gew.-%, auf. Besonders bevorzugt ist in diesem Fall ein Zinkgehalt von 0,1 bis 5 Gew.-%.

Eine saure, wäßrige Lösung, die sowohl den Eisen-III-Chlorokomplex als auch den Zink-II-Chlorokomplex enthält, hat vorzugsweise einen Eisengehalt von 0,01 bis 8,0, insbesondere 0,05 bis 4 Gew.-%, und einen Zinkgehalt von 0,01 bis 8,0, inbesondere 0,05 bis 4 Gew.-%.

Im erfindungsgemäßen Verfahren kommt der sauren, wäßrigen Lösung in der Regel eine zweifache Aufgabe zu. Zum einen dient sie der Reextraktion des Cadmium-Chlorokomplexes aus der Cadmium-beladenen organischen Phase und zum anderen wird sie zur Bildung der erfindungsgemäßen Salze aus Aminen oder quaternären Ammoniumbasen und Chlorokomplexen eines mehrwertigen Metalls herangezogen. Beide Aufgaben können erfindungsgemäß gleichzeitig durchgeführt werden, indem der Austausch der anionischen Chlorokomplexe an den Amin- oder quaternären Ammoniumkationen in Form einer Flüssig-Flüssig-Extraktion durchgeführt wird.

Die organische Phase wird in der Regel primär durch Auflösen der obigen Amine oder quaternären Ammoniumbasen in den geeigneten organischen Lösungsmitteln und der Nachbehandlung der organischen Lösung mit der sauren wäßrigen Lösung in Form einer einstufigen Extraktion hergestellt. Beim kontinuierlichen Betrieb des erfindungsgemäßen Verfahrens findet durch den Kontakt der organischen Phase mit der sauren wäßrigen Lösung permanent die Bildung der erfindungsgemäß verwendeten Salze statt.

Die Konzentration der erfindungsgemäß verwendeten Salze in der organischen Phase wird durch die Menge an gelöstem Amin und/oder quaternärer Ammoniumbase festgelegt. Die Salzkonzentration ergibt sich aus der Umsetzung der Basenäquivalente mit den Säureäquivalenten der Chlorokomplexe der mehrwertigen Metalle.

Vorzugsweise wird im erfindungsgemäßen Verfahren mit organischen Lösungen gearbeitet, in denen das Amin und/oder die quaternäre Ammoniumbase im Konzentrationsbereich von 0,1 bis 10 Gew.-%, insbesondere 0,2 bis 5,0 Gew.-%, vorliegt.

Bei der Herstellung von organischen Lösungen mit einer höheren Salzkonzentration ist es, insbesondere bei der Verwendung von unpolaren organischen Lösungsmitteln, empfehlenswert, der organischen Lösung kleine Mengen eines Lösungsvermittlers zuzusetzen. Als Lösungsvermittler kommen z.B. langkettige Alkohole, vorzugsweise mit mindestens 8 Kohlenstoffatomen, infrage. Die anzuwendende Menge des Lösungsvermittlers ist durch Versuche von Fall zu Fall leicht zu ermitteln.

Das erfindungsgemäße Verfahren wird vorzugsweise in einem Temperaturbereich von 15 bis 25 °C durchgeführt. Es kann aber auch ohne Einschränkungen bei höheren Temperaturen, z.B. im Temperaturbereich bis 80 °C, gearbeitet werden. Die obere Temperaturgrenze wird von der Art des organischen Lösungsmittels und dessen Dampfdruck im Vergleich zum äußeren Druck bestimmt. Die untere Temperaturgrenze richtet sich nach dem Viskositätsverhalten der beiden flüssigen Phasen. Ein starker Anstieg der Viskosität führt zu Störungen beim Mischen und Trennen der Phasen und kann so zum Erliegen des Extraktionsprozesses führen.

Das erfindungsgemäße Verfahren wird vorzugsweise bei Normaldruck durchgeführt, es kann aber auch bei vermindertem Druck oder unter Überdruck gearbeitet werden.

Weiter kann das erfindungsgemäße Verfahren sowohl in absatzweiser als auch in kontinuierlicher Fahrweise betrieben werden. Bei der Anwendung im industriellen Maßstab wird das Verfahren vorzugsweise kontinuierlich betrieben. Im wesentlichen bestehen die dazu notwendigen Extraktionsapparaturen aus einer Extraktions- und Reextraktionseinheit, die in der Regel einstufig in Form von Mixer-Settlern betrieben werden. Beide Extraktionseinheiten sind für die Kreislaufführung der organischen Phase durch Rohrleitungen und Pumpen miteinander verbunden.

Die Herstellung der erfindungsgemäß eingesetzten Salze in der organischen Lösungsmittelphase erfolgt dabei in der Reextraktionseinheit durch Behandlung der organischen Phase mit der sauren, wäßrigen Lösung. Die abgetrennte Lösungsmittelphase wird, gegebenenfalls über ein Puffergefäß, dann zur Extraktionseinheit zurückgeführt.

Die Behandlung der Cadmium-haltigen Rohsäure in der Extraktionseinheit erfolgt vorzugsweise durch intensives Mischen mit der zugeführten Lösungsmittelphase. Nach der Phasentrennung wird die Cadmium-abgereicherte Naßverfahrenssäure aus dem kontinuierlichen Verfahren ausgetragen.

Vorzugsweise wird die Cadmium-haltige Lösungsmittelphase dann in die Reextraktionseinheit geleitet und dort durch Behandlung mit der sauren, wäßrigen Lösung, die den Chlorokomplex eines mehrwertigen Metalls enthält, behandelt, wodurch der anionische Chlorokomplex des Cadmiums in die wäßrige Phase und der anionische Chlorokomplex des mehrwertigen Metalls in die organische Phase wandert. Die organische Lösungsmittelphase wird in die Extraktionseinheit zurückgeführt. Die ausgetragene saure, wäßrige Lösung, die das reextrahierte Cadmium enthält, kann dann der Entsorgung zugeführt oder zu definierten Cadmiumverbindungen aufgearbeitet werden. Vorzugsweise wird sie jedoch nach dem unten näher erläuterten besonders vorteilhaften Verfahren weiterbehandelt.

Das erfindunsgemäße Extraktionsverfahren wird vorzugsweise unter solchen Bedingungen durchgeführt, die in der Naßverfahrensphosphorsäure eine maximale Abreicherung des Cadmiums und in der ausgeschiedenen sauren, wäßrigen Lösung eine maximale Anreicherung des extrahierten Cadmiums gewährleisten.

Bei der Extraktion des Camdiums aus der Phosphorsäure liegen die Gewichtsverhältnisse von organischer Phase zu Säurephase vorzugsweise im Bereich von 1:1 bis 1:10. Das unter den jeweiligen Bedingungen günstigste Phasenverhältnis wird vom Cadmiumgehalt der Phosphorsäure, dem gewünschten Abreicherungsgrad und der Konzentration der erfindungsgemäß eingesetzten Salze in der organischen Phase bestimmt.

Bei der erfindungsgemäß bevorzugten Reextraktion des Cadmiums aus der organischen Phase liegen die Gewichtsverhältnisse von organischer Phse zu saurer, wäßriger Lösung vorzugsweise im Bereich von 1:10 bis 10:1. In diesem Fall ist das optimale Phasenverhältnis eine Funktion der Konzentration der Salze in der organischen Phase und der Konzentration der Chlorokomplexe mehrwertiger Metalle in der sauren, wäßrigen Lösung.

Bei dem oben beschriebenen Extraktions- und Reextraktionsverfahren fällt als Abstrom eine saure, mit Cadmium beladene wäßrige Lösung (im folgenden gelegentlich auch als Reextrakt oder Reextraktlösung bezeichnet) an, die als wesentliche Bestandteile Salzsäure, Schwermetall (Cd, Fe, Zn etc)-, Phosphat- und Chloridionen enthält. Ihre Zusammensetzung wird sowohl durch den Reextrakt selbst als auch durch bei der Extraktion mitgerissene Phosphosäuretröpfchen bestimmt. Je nach den Bedingungen, unter denen das Cadmium-Extraktionsverfahren betrieben wird, schwankt die Zusammensetzung des ausgetragenen Reextraktstromes. Sie variiert in der Regel innerhalb der folgenden Bereiche (in Gew.-%):

| | |
|---|---|
| Gesamtchlorid | 13,0 bis 19,0 |
| Salzsäure | 5,0 bis 16,0 |
| P₂O₅ | 1,0 bis 12,0 |
| Eisen | 0,02 bis 0,4 |
| Zink | 0,5 bis 1,5 |
| Cadmium | 0,05 bis 0,25 |

Diese saure, wäßrige Lösung kann durch Neutralisations- und Fällungsverfahren des Standes der Technik praktisch nicht entsorgt werden: Der Gehalt an freier Salzsäure und Phosphorsäure führt zu einem übermäßig hohen Bedarf an Neutralisationschemikalien, und der Gehalt an Schwermetallen, insbesondere Cadmium; erfordert eine Entsorgung der anfallenden Schlämme über eine Sonderdeponie.

Das bei der Fällung anfallende Filtrat erfüllt nicht die strengen Anforderungen, die in vielen Ländern durch die Einleitungsbedingungen für Abwässer vorgegeben sind. Die Grenzwerte für pH-Wert, Zink und Cadmium im Abwasser schließen durch gegenseitige Störeinflüsse eine sachgerechte Konditionierung der Abwässer aus.

Nach R. Weiner: "Die Abwässer in der Metallindustrie", 3. Auflage, Seite 144, ergibt sich für die Restlöslichkeiten der vor allem in Frage kommenden Schwermetalle folgende pH-Wert-Abhängigkeit:

| pH-Wert bei der Fällung | Restgehalt der Schwermetalle (mg / l ) | | |
|---|---|---|---|
| | Fe | Zn | Cd |
| 6,5 | 0,8 | 18,5 | 19,2 |
| 7,0 | 0,4 | 17,8 | 18,4 |
| 8,0 | 0 | 9,1 | 15,2 |
| 8,5 | 0 | 1,6 | 4,8 |
| 9,0 | 0 | 1,5 | 0,9 |
| 10,0 | 0 | 8,4 | 0 |

Die angeführten Werte gelten nur für Fällungen mit Natronlauge in wäßrigen Lösungen mit einer Härte von 17,5 ° dH. Durch den in aller Regel hohen Chloridgehalt der erfindungsgemäß anfallenden Reextrakte wird die oben ausgewiesene Restlöslichkeit der Schwermetalle zusätzlich negativ beeinflußt.

Die Grenzkonzentrationen für die Einleitung von Abwässern in den Vorfluter sind in der BRD z.Zt. auf folgende Werte festgesetzt:

| | |
|---|---|
| pH-Wert | 6,5 - 8,5 |
| Fe | keine Angaben |
| Zn | 5 mg/l |
| Cd | 0,5 mg/l |

Daraus ergibt sich, daß bei Einhaltung der pH-Grenzwerte nur Eisen und Zink zufriedenstellend abgeschieden werden können, Cadmium aber in Lösung bleibt. Cadmium kann erst nach starker Überschreitung des vorgeschriebenen maximalen pH-Wertes (≧ 10) quantitativ abgeschieden werden. Bei derartig hohen pH-Werten geht Zink jedoch wieder in Lösung, und überdies verbietet der hohe pH-Wert ohnehin die Einleitung der Abwässer in den Vorfluter.

Insgesamt führt der Bedarf an Chemikalien für die Neutralisation und Fällung zu einer starken Vergrößerung der Abwassermenge, d.h. die Abwassermenge wächst in der Regel auf ein Mehrfaches der Menge der zu entsorgenden sauren, wäßrigen Lösung an. Zusätzlich wird die Deponie durch ein vergrößertes Volumen an Deponiegut belastet.

Die Entsorgung der sauren, wäßrigen, Schwermetall- und Chloridionen enthaltenden Lösung stellt neben den umweltrelevanten Begleitumständen auch ein sehr kostenintensives Unterfangen dar, was insbesondere auf den hohen Chemikalienbedarf und die Deponiekosten zurückzuführen ist.

Erfindungsgemäß kann eine umweltbelastende Aufarbeitung des Reextrakts durch naßchemische Fällungsreaktionen, verbunden mit der Deponierung von großen Schlammvolumina und dem Anfall von Abwasserströmen, umgangen werden, indem man aus dem Reextrakt die freie Salzsäure durch physikalische Trennverfahren zumindest weitgehend entfernt und gegebenenfalls zur Extraktions- und/oder Reextraktionsstufe zurückführt, die verbleibende Lösung aufkonzentriert und danach gegebenenfalls abkühlt, den resultierenden Cadmium-haltigen Niederschlag abtrennt und das Filtrat gegebenenfalls der zu entcadmierenden Rohphosphorsäure zusetzt.

Da die Aufarbeitung des Reextrakts mit Hilfe physikalischer Methoden erfolgt, ist der Einsatz irgendwelcher Chemikalien zur Neutralisation oder Fällung der Schwermetalle nicht erforderlich und Abwasser fällt dabei nicht an. Aufgrund dieser Umstände ist das erfinderische Aufarbeitungsverfahren für den Reextrakt außerordentlich umweltfreundlich.

Die Abtrennung und Rückgewinnung der freien Salzsäure erfolgt vorzugsweise durch Destillation. Die Rückgewinnung der freien Salzsäure liegt vorzugsweise im Bereich von 80 bis 100, insbesondere 95 bis 100 Gew.-%, bezogen auf die in der sauren, wäßrigen Reextraktlösung ursprünglich vorhandene freie Salzsäuremenge.

Die Destillation ist unabhängig von der Zusammensetzung des Reextrakts anwendbar. Sie liefert in Verbindung mit einer Rektifikationsanlage einen konstanten wäßrigen Salzsäurestrom azeotroper Zusammensetzung mit 20,17 % HCl / 79,83 % H₂O und eine kleine Menge an Wasser, das bei der Rektifikation der Brüden anfällt. Damit wird für die Wiederverwendung der Salzsäure eine wichtige Voraussetzung erfüllt. Die Azeotrop-Destillation führt in Verbindung mit der hohen Rückgewinnungsrate an Salzsäure zu einer starken Verkleinerung des Volumens und einer starken Aufkonzentrierung des Reextrakts. Üblicherweise wird die Salzsäure in einem Siedebereich von 100 bis 108 °C abgetrieben.

Es wurde überraschenderweise gefunden, daß sich beim Aufkonzentrieren des anfallenden Reextrakts ein Feststoff (in der Regel feine, nadelförmige Kristalle) aus der Lösung ausscheidet, der einen hohen Cadmium- und Chloridgehalt aufweist. Die Ausscheidung des Feststoffs tritt bereits bei einer Siedetemperatur der Lösung im Bereich von 130 bis 160 °C auf.

Diese Temperatur entspricht einer P₂O₅-Konzentration von 40 bis 60 %. Vorzugsweise wird die Lösung auf P₂O₅-Konzentrationen von 45 bis 57 % aufkonzentriert. Zur Ausbildung der Kristalle sollte die Chloridionenkonzentration in der aufkonzentrierten Lösung bei 0,5 bis 8,0, vorzugsweise 1,0 bis 6,0 Gew.-%, liegen. Die Abscheidung des Cadmiumhaltigen Feststoffs wird beim Abkühlen der Lösung auf vorzugsweise Raumtemperatur (ca. 20 °C) vervollständigt. Der resultierende Niederschlag kann z.B. durch Filtration oder Dekantation von der konzentrierten Lösung abgetrennt werden.

Das soeben geschilderte Verhalten des Cadmiums ist überraschend, da es bisher nicht bekannt war, daß Cadmium als Chlorid aus einer konzentrierten, Phosphat- und Chloridionen enthaltenden Lösung auskristallisiert. Dieses Verhalten ist um so überraschender, als Cadmiumchlorid allgemein zu den sehr leicht löslichen Verbindungen gezählt wird. Es war deshalb nicht zu erwarten, daß in den aufkonzentrierten Reextrakten Cadmium als Chlorid auskristallisiert.

Nicht vorauszusehen war weiterhin, daß mit der Ausscheidung der Kristalle eine nahezu vollständige Abscheidung des Cadmiums und eine Abtrennung desselben von anderen Schwermetallionen (insbesondere Fe und Zn) in dem konzentrierten Reextrakt einhergeht. Zink, das ebenfalls im Überschuß in der aufkonzentrierten Lösung vorhanden sein kann, zeigt im Gegensatz zu dem allgemein vergleichbaren Verhalten von Cadmium und Zink keine Tendenz zum Auskristallisieren. Es kommt daher in der aufkonzentrierten Lösung durch die Kristallisation des Cadmiumsalzes zu einer nahezu vollständigen Cadmium/Zink-Trennung.

Die nachfolgende Tabelle zeigt die Restlöslichkeit des Cadmiums in den aufkonzentrierten Lösungen in Abhängigkeit von der P₂O₅-Konzentration, wie sie durch Versuche ermittelt wurde.

| P₂O₅ (%) | Cl (%) | Gesamt-Cd (%) | Restlöslichkeit Cd (%) | Cd-Abreicherung (%) |
|---|---|---|---|---|
| 42,3 | 6,0 | 0,56 | 0,010 | 98,2 |
| 46,3 | 5,0 | 0,61 | 0,009 | 98,5 |
| 50,0 | 4,0 | 0,52 | 0,006 | 98,8 |
| 54,6 | 3,1 | 0,47 | 0,004 | 99,1 |
| 57,1 | 2,2 | 0,54 | 0,002 | 99,6 |

Die obige Tabelle zeigt, daß mit dem erfindungsgemäßen Verfahren eine nahezu vollständige Abtrennung des Cadmiums erreicht wird.

Das überraschende Verhalten des Cadmiums beim Aufkonzentrieren der von Salzsäure weitgehend befreiten, noch Schwermetall-, Phosphat- und Chloridionen enthaltenden wäßrigen, sauren Lösungen ist entscheidend für eine mögichst vorteilhafte Aufarbeitung des beim erfindungsgemäßen Extraktions-/Reextraktions-Verfahren anfallenden Reextrakts. Das hoch-toxische Schwermetall Cadmium kann selektiv und in konzentrierter Form auf einfache Art aus dem Vielstoff-Gemisch der konzentrierten Lösung ausgeschieden werden, ohne daß der Einsatz weiterer Chemikalien, z.B. zur Durchführung von Neutralisations- und Fällungsreaktionen, notwendig wäre.

Das soeben beschriebene Verfahren gestattet somit auf denkbar einfache und umweltfreundliche Art, die kritische Komponente Cadmium aus dem Reextrakt zu entfernen.

In der Praxis wird das obige Verfahren zur Aufarbeitung der mit Cadmium beladenen wäßrigen, sauren Reextraktlösung bevorzugt in einer mehrstufigen, insbesondere zweistufigen Destillationsapparatur, die aus einer Abtriebsblase und eine Rektifikationskolonne besteht, durchgeführt. Das Verfahren kann absatzweise oder kontinuierlich bei Normaldruck oder auch unter Vakuum durchgeführt werden.

Beim absatzweisen Betrieb wird in der ersten Stufe in einer Destillationsblase durch Erhitzen aus dem sauren, wäßrigen Reextrakt die freie Salzsäure mindestens zum Großteil abgetrieben. Dabei beträgt die erforderliche Sumpftemperatur in der Regel ungefähr 115 bis 120 °C. Nach der Entfernung der freien Salzsäure wird in der Sumpflösung die Temperatur langsam vorzugsweise auf Werte bis zu etwa 160 °C angehoben. Dabei entsteht eine Suspension, bestehend aus der konzentrierten Lösung und dem ausgefallenen Cd-haltigen Feststoff.

Die aus der Destillationsblase austretenden HCl/H₂O-Brüden werden im Rektifizierteil der Destillationsapparatur in die konstant siedende H₂O-Mischung mit 20,17 % HCl und in H₂O aufgetrennt. Die in der Destillationsblase zurückbleibende Suspension wird abgelassen, unter Rühren vorzugsweise auf Normaltemperatur abgekühlt und filtriert. Das Filtrat mit einem geringen Cd-Restgehalt besteht im wesentlichen aus der Phosphorsäure, die durch den Extraktionsprozeß in den Reextrakt eingeschleppt wurde.

Im Falle einer kontinuierlichen Aufarbeitung des wäßrigen, sauren Reextraktes wird im Prinzip in gleicher Weise verfahren. Die Destillationsblase ist jedoch vorzugsweise als Umlaufverdampfer ausgebildet. Die Temperatur wird auf einen Wert, der der gewünschten Endkonzentration entspricht, eingestellt. Der Zulauf des aufzuarbeitenden Reextraktes erfolgt über die Temperatursteuerung im Umlaufverdampfer. Alle Abströme aus der Destillation fallen kontinuierlich an und werden sinngemäß in der gleichen Weise wie beim absatzweisen Betrieb weiterverarbeitet.

Die Menge an anfallendem Feststoff ist vom Cadmiumgehalt der aufkonzentrierten Sumpflösung abhängig. Im allgemeinen hat die aufkonzentrierte Sumpflösung einen Feststoffgehalt von 0,5 bis 2,0 Gew.-%. Die Isolierung des Niederschlags erfolgt am zweckmäßigsten durch Filtration. Andere Abtrennungsmethoden wie z.B. Dekantation, sind ebenfalls anwendbar. Trotz des hohen P₂O₅-Gehaltes und der hohen Dichte verläuft die Filtration problemlos, da in aller Regel nadelförmige Kristalle, die einen sperrigen, gut durchlässigen Filterkuchen aufbauen, anfallen.

Der feuchte Filterkuchen hat normalerweise einen CdCl₂-Gehalt im Bereich von 30 bis 60 Gew.-%. Er wird durch die Menge an anhaftender Sumpflösung bestimmt. Der Filterkuchen kann ohne Waschprozeß isoliert und in einen deponierfähigen Zustand gebracht werden. Es ist auch möglich, den Filterkuchen als hochprozentigen Cd-Rohstoff einer anderen Nutzung zuzuführen.

Wenn eine Endlagerung auf einer Sonderdeponie vorgesehen ist, kann der Niederschlag gegebenenfalls durch Zumischen von Branntkalk in ein trockenes, pulverförmiges Endprodukt, das als wäßrige Suspension einen pH-Wert von >10 hat, überführt werden. Die zu diesem Zweck verwendete CaO-Menge ist in der Regel das 0,6- bis 0,8-Fache der Menge an abfiltriertem Cadmium-haltigen Feststoff.

Die beim Betrieb des erfindungsgemäßen Reextrakt-Aufarbeitungsverfahrens anfallenden Destillate und Phosphorsäureströme können als Hilfs- bzw. Rohstoffe in das Cd-Extraktions-/Reextraktionsverfahren, aus dem der Abstrom anfällt, rezirkuliert werden.

Die anfallende Salzsäure kann z.B. zum Ansetzen einer frischen Reextrakt-Lösung verwendet werden.

Das Cadmium-abgereicherte Filtrat, das im wesentlichen aus konzentrierter Phosphorsäure besteht, kann dem in den Extraktionsprozeß einlaufenden Rohphosphorsäurestrom zugeschlagen werden. Der Rest-Cd-Gehalt beeinflußt die Cd-Bilanz im Extraktionsverfahren kaum, da die rückgeführte Menge im allgemeinen nur ca. 0,1 bis 0,3 % der Menge an Naßverfahrensphosphorsäure, die im Cd-Extraktionsprozeß verarbeitet wird, beträgt.

Besonders vorteilhaft an dem soeben geschilderten Aufarbeitungsverfahren ist es, daß durch die Rückführung der aufgetrennten Teilströme in den Extraktions-/Reextraktionsprozeß das Gesamtverfahren außerordentlich kostengünstig durchgeführt werden kann. Chemikalien werden kaum benötigt und Kosten entstehen praktisch nur durch den Energiebedarf der Destillation in Verbindung mit der Aufkonzentrierung der Sumpflösung.

Die folgenden Beispiele erläutern die vorliegende Erfindung. Falls nicht anders angegeben, beziehen sich darin die Prozentangaben auf das Gewicht.

### Beispiel 1

Eine durch Schwefelsäureaufschluß von marokkanischem Phosphaterz hergestellte und aufkonzentrierte Rohphosphorsäure hatte folgende Analysendaten:

| | |
|---|---|
| P₂O₅ | 55,5 % |
| SO₃ | 1,10 % |
| F | 0,35 % |
| Cl | 0,003 % |
| Mg | 0,42 % |
| Ca | 0,036 % |
| Zn | 0,043 % |
| Cd | 0,0018 % |
| Fe | 0,34 % |
| Al | 0,39 % |
| Cr | 0,041 % |
| V | 0,045 % |

Die auf 60 °C aufgewärmte Säure wurde in einer kontinuierlich arbeitenden einstufigen Mixer-Settler-Apparatur mit einer organischen Lösungsmittelphase, bestehend aus:

| | |
|---|---|
| Aliphat. KW-Stoff, Sdp. 204 °C | 97,5 % |
| Tridodecylamin-H(FeCl₄)-Salz | 2,0 % |
| Dodecanol | 0,5 % |

über eine Laufzeit von 80 Betriebsstunden, im Phasenverhältnis von 1:3 (Gew.Teile org. Phase / Gew.Teile Säurephase) bei einer Dosierung von 45 kg/h Säure extrahiert. Die Verweilzeit im Mixer betrug 6 min, die im Settler 30 min.

Nach der Trennung der Phasen hatte die ablaufende entcadmierte Phosphorsäure die Zusammensetzung:

| | |
|---|---|
| P₂O₅ | 55,4 % |
| SO₃ | 1,10 % |
| F | 0,35 % |
| Cl | 0,02 % |
| Mg | 0,42 % |
| Ca | 0,036 % |
| Zn | 0,029 % |
| Cd | 0,00015 % |
| Fe | 0,35 % |
| Al | 0,39 % |
| Cr | 0,041 % |

Die kontinuierlich aus der Extraktionseinheit ablaufende, Cadmium-haltige organische Lösungsmitelphase wurde in einer einstufigen Mixer-Settler-Apparatur im Phasenverhältnis 10:1 (Gew.Teile org. Phase / Gew.Teile wäßrige Phase) bei einer Dosierung von 1,5 kg/h mit einer sauren wäßrigen Lösung behandelt.

Die saure wäßrige Lösung hatte die Zusammensetzung:

| | |
|---|---|
| Gesamtchlorid | 17,0 % |
| HCl | 7,5 % |
| Fe³⁺ | 1,8 % |
| Na | 4,0 % |
| H₂O | 77,0 % |

Das Gemisch hatte eine Verweilzeit von 12 min im Mixer und 45 min im Settler.

Nach dem Trennen der Phasen wurde die mit dem Eisen-III-Chlorokomplex aufgefrischte organische Lösungsmittelphase in die Extraktionseinheit zurückgeführt. Die ablaufende saure wäßrige Lösung wies die folgenden Analysenwerte auf:

| | |
|---|---|
| Cl | 16,4 % |
| Fe | 1,4 % |
| Zn | 0,41 % |
| Cd | 0,049 % |
| Na | 4,1 % |
| P₂O₅ | 3,0 % |
| H₂O | 73,5 % |

### Beispiel 2

Die gleiche Rohphosphorsäure wurde nach den gleichen Kriterien, wie in Beispiel 1 beschrieben, behandelt. Jedoch wurde in Abänderung zu Beispiel 1 die Extraktion der Rohphosphorsäure mit einer organischen Lösungsmittelphase durchgeführt, in der die Salze des Eisen-III-Chlorokomplexes und des Zink-II-Chlorokomplexes mit dem Tridodecylamin gelöst waren. Die organische Lösungsmittelphase hatte die Zusammensetzung:

| | |
|---|---|
| Aliphat. KW-Stoff, Sdp. 140 °C | 98,1 % |
| Tridodecylamin-H(FeCl₄)-Salz | 0,7 % |
| Tridodecylamin-H₂(ZnCl₄)-Salz | 0,7 % |
| Dodecanol | 0,5 % |

Nach der Trennung der Phasen hatte die ablaufende, entcadmierte Phosphorsäure die Zusammensetzung:

| | |
|---|---|
| P₂O₅ | 55,4 % |
| SO₃ | 1,10 % |
| F | 0,35 % |
| Cl | 0,02 % |
| Mg | 0,42 % |
| Ca | 0,036 % |
| Zn | 0,04 % |
| Cd | 0,00009 % |
| Fe | 0,34 % |
| Al | 0,39 % |
| Cr | 0,041 % |
| V | 0,045 % |

Die ablaufende, cadmiumhaltige organische Lösungsmittelphase wurde so weiterbehandelt, wie in Beispiel 1 beschrieben, jedoch im Gegensatz zu Beispiel 1 hatte die saure wäßrige Lösung die Zusammensetzung:

| | |
|---|---|
| Gesamtchlorid | 17,0 % |
| HCl | 3,5 % |
| Fe³⁺ | 1,0 % |
| ZN²⁺ | 1,2 % |
| Na | 6,7 % |
| H₂O | 74,0 % |

Nach dem Trennen der Phasen wurde die organische Lösungsmittelphase in die Extraktionseinheit zurückgeführt. Die cadmiumhaltige, saure wäßrige Lösung hatte die Zusammensetzung:

| | |
|---|---|
| Cl | 16,5 % |
| Fe | 1,3 % |
| Zn | 1,1 % |
| Cd | 0,05 % |
| Na | 6,8 % |
| P₂O₅ | 2,9 % |
| H₂O | 72,1 % |

### Beispiel 3

Eine Naßverfahrensphosphorsäure, die nach dem Hemihydratverfahren aus Togo-Phosphaterz durch Aufschluß mit Schwefelsäure hergestellt wurde, hatte die Analysendaten:

| | |
|---|---|
| P₂O₅ | 41,5 % |
| SO₃ | 1,8 % |
| F | 1,1 % |
| Cl | 0,34 % |
| Mg | 0,11 % |
| Ca | 0,040 % |
| Zn | 0,032 % |
| Cd | 0,0042 % |
| Fe | 0,95 % |
| Al | 0,10 % |
| Cr | 0,013 % |
| V | 0,013 % |

Die Rohsäure wurde kontinuierlich bei Raumtemperatur (22 °C) in einer einstufigen Mixer-Settler-Apparatur mit einer organischen Lösungsmittelphase, bestehend aus:

| | |
|---|---|
| Aliphat. KW-Stoff, Sdp. 140°C | 96,6 % |
| Diisononyl-H(FeCl₄)-Salz | 2,4 % |
| Dodecanol | 1,0 % |

im Phasenverhältnis 1:2 (Gew.Teile org. Phase / Gew.Teile Säurephase) extrahiert. Die dosierte Säuremenge betrug 45 kg/h. Die Verweilzeit im Mixer betrug 5 min, im Settler 23 min.

Nach der Trennung der Phasen hatte die entcadmierte Rohsäure folgende Analysendaten:

| | |
|---|---|
| P₂O₅ | 41,4 % |
| SO₃ | 1,8 % |
| F | 1,1 % |
| Cl | 0,37 % |
| Mg | 0,11 % |
| Ca | 0,040 % |
| Zn | 0,029 % |
| Cd | 0,00012 % |
| Fe | 0,98 % |
| Al | 0,10 % |
| Cr | 0,013 5 |
| V | 0,013 % |

Die cadmiumhaltige organische Lösungsmittelphase wurde kontinuierlich in einer Mixer-Settler-Einheit im Phasenverhältnis 10:1 (Gew.Teile org.Phase / Gew.Teile wäßrige Phase) mit einer sauren wäßrigen Lösung extrahiert. Die saure, wäßrige Lösung hatte die Zusammensetzung:

| | |
|---|---|
| Gesamtchlorid | 19,3 % |
| HCl | 8,5 % |
| Fe³⁺ | 2,5 % |
| Na | 4,0 % |
| H₂O | 74,0 % |

Die eingesetzte Menge an saurer wäßriger Lösung betrug 2,25 kg/h. Die Verweilzeit im Mixer betrug 10 min, im Settler 45 min.

Nach dem Trennen der Phasen wurde die organische Lösungsmittelphase in die Extraktionseinheit kontinuierlich zurückgeführt. Die ablaufende Cadmium-haltige , saure wäßrige Lösung hatte die Zusammensetzung:

| | |
|---|---|
| Cl | 18,7 % |
| Fe | 2,0 % |
| Zn | 0,06 % |
| Cd | 0,082 % |
| Na | 4,0 % |
| P₂O₅ | 1,8 % |
| H₂O | 72,7 % |

Der Versuch hatte eine Laufzeit von 32 Betriebsstunden.

### Beispiel 4

Eine Filtersäure, die nach dem Naßverfahren aus marokkanischem Phosphaterz durch Schwefelsäureaufschluß hergestellt wurde, hatte die Analysendaten:

| | |
|---|---|
| P₂O₅ | 29,8 % |
| SO₃ | 2,2 % |
| F | 2,8 % |
| Cl | 0,063 % |
| Mg | 0,34 % |
| Ca | 0,10 % |
| Zn | 0,025 % |
| Cd | 0,0015 % |
| Fe | 0,21 % |
| Al | 0,26 % |
| Cr | 0,020 % |
| V | 0,021 % |

Die Rohsäure wurde kontinuierlich bei 40 °C in einer geschlossenen einstufigen Mixer-Settler-Apparatur im Labormaßstab mit einer organischen Lösungsmittelphase, bestehend aus einer 1,2 %igen Lösung von Tri-octyl-methyl-ammonium- (FeCl₄)-Salz, gelöst in Xylol, extrahiert. Die dosierten Mengen betrugen:

| | |
|---|---|
| Rohsäure | 2,0 kg/h |
| Lösungsmittelphase | 0,4 kg/h |

Die Verweilzeit im Mixer betrug 8 min, im Settler 40 min.

Nach dem Trennen der Phasen hatte die entcadmierte Filtersäure folgende Analysendaten:

| | |
|---|---|
| P₂O₅ | 29,7 % |
| SO₃ | 2,2 % |
| F | 2,8 % |
| Cl | 0,079 % |
| Mg | 0,34 % |
| Ca | 0,10 % |
| Zn | 0,033 % |
| Cd | 0,00009 % |
| Fe | 0,17 % |
| Al | 0,26 % |
| Cr | 0,020 % |
| V | 0,021 % |

Die ablaufende Cadmium-haltige Lösungsmittelphase wurde in einer geschlossenen einstufigen Mixer-Settler-Apparatur mit einer sauren wäßrigen Lösung im Phasenverhältnis 10:1(Gew.Teile org. Phase / Gew.Teile wäßrige Phase) reextrahiert, die folgende Analysendaten hatte:

| | |
|---|---|
| Gesamtchlorid | 18,5 % |
| HCl | 8,5 % |
| Zn | 2,5 % |
| Na | 4,9 % |
| H₂O | 73,9 % |

Die Verweilzeit in der Mixer-Settler-Einheit betrug im Mixer 30 min, im Settler 45 min.

Nach dem Trennen der Phasen wurde die organische Lösungsmittelphase in die Säure-Extraktionseinheit rezirkuliert. Die resultierende Cadmium-haltige, saure wäßrige Lösung hatte die Zusammensetzung:

| | |
|---|---|
| Cl | 17,6 % |
| Zn | 2,1 % |
| Cd | 0,070 % |
| Na | 4,9 % |
| P₂O₅ | 4,3 % |
| H₂O | 69,4 % |

Die Laufzeit des Versuches betrug 7 Betriebsstunden.

Die folgenden Beispiele betreffen die Aufarbeitung des erfindungsgemäß erhältlichen sauren wäßrigen Reextrakts.

### Beispiel 5

Bei der erfindungsgemäßen Entcadmierung einer aus Marokko-Rohphosphat hergestellten Naßverfahrensphosphorsäure durch Flüssig-Flüssig-Extraktion und der anschließenden Reextraktion der organischen Phase fielen 210 kg/h einer Cd-haltigen wäßrigen Reextraktlösung an. Der Reextrakt hatte die folgenden Analysendaten:

| | |
|---|---|
| Gesamtchlorid | 14,1 % |
| HCl | 13,7 % |
| P₂O₅ | 8,5 % |
| Fe | 0,15 % |
| Zn | 1,04 % |
| Cd | 0,11 % |

Der Reextraktstrom wurde kontinuierlich in einer zweistufigen Destillationsapparatur aufgetrennt. Die Sumpf-Temperatur im Umlaufverdampfer betrug 150 °C, die P₂O₅-Konzentration 51,1 %.

Während der Destillation fielen kontinuierlich folgende Mengen an:

| | |
|---|---|
| Sumpf-Ablauf | 34,1 kg/h |
| HCl/H₂O-Destillat | 142,6 kg/h |
| H₂O-Destillat | 33,3 kg/h |

Die Destillate wurden zum Ansetzen frischer Reextraktionslösungen wiederverwendet.

Der Sumpf-Ablauf wurde kontinuierlich in einer Vorlage gesammelt und unter Rühren auf 20 °C abgekühlt. Die Abtrennung der ausgefallenen CdCl₂-Kristalle erfolgte chargenweise mit Hilfe einer Filterpresse. Vor der Filtration hatte die Sumpfsuspension die folgenden Analysendaten:

| | |
|---|---|
| P₂O₅ | 51,1 % |
| Cl | 4,8 % |
| Fe | 0,92 % |
| Zn | 6,40 % |
| Cd | 0,68 % |

Nach der Filtration des Cd-Niederschlages hatte die Sumpflösung bei sonst nur unwesentlich veränderten Analysendaten einen Rest-Cd-Gehalt von 56 ppm. Daraus ergibt sich eine Cd-Abtrennung von 99,2 %.

Die anteilige Menge an abfiltriertem filterfeuchtem Cd-Niederschlag betrug 0,80 kg/h. Der CdCl₂-Gehalt im Niederschlag war 46,9 %.

Die von ausgefallenem Cd-Salz befreite Sumpflösung wurde dem Strom der zu entcadmierenden Naßverfahrensphosphorsäure zugeschlagen. Der filterfeuchte Cd-Niederschlag wurde mit 0,65 kg/h Branntkalk intensiv vermischt und als trockenes Gemisch der Deponierung zugeführt.

### Beispiel 6

Bei der erfinderischen Entcadmierung einer aus westafrikanischem Rohphosphat hergestellten Naßverfahrensphosphorsäure durch Flüssig-Flüssig-Extraktion und der anschließenden Reextraktion der organischen Phase fielen 149,0 kg/h einer Cd-haltigen wäßrigen Reextraktlösung an. Der Reextrakt wies die folgenden Analysenwerte auf:

| | |
|---|---|
| Gesamtchlorid | 14,0 % |
| HCl | 13,8 % |
| P₂O₅ | 4,60 % |
| Fe | 0,20 % |
| Zn | 0,60 % |
| Cd | 0,21 % |

Der Reextraktstrom wurde kontinuierlich in einer zweistufigen Destillationsapparatur aufgetrennt. Die Sumpftemperatur im Umlaufverdampfer betrug 154 °C, die P₂O₅-Konzentration 53,6 %.

Während der Destillation fielen kontinuierlich folgende Mengen an:

| | |
|---|---|
| Sumpfablauf | 12,8 kg/h |
| HCl/H₂O-Destillat | 101,9 kg/h |
| H₂O-Destillat | 34,3 kg/h |

Die Destillate wurden zum Ansetzen von frischer Reextraktlösung zur Reextraktionseinheit zurückgeführt.

Die kontinuierlich anfallende Sumpflösung wurde in einer Vorlage gesammelt und unter Rühren auf 20 °C abgekühlt. Die Abtrennung des resultierenden CdCl₂-Niederschlages erfolgte chargenweise mit Hilfe einer Filterpresse. Vor der Filtration hatte die Suspension folgende Analysendaten:

| | |
|---|---|
| P₂O₅ | 53,6 % |
| Cl | 6,8 % |
| Fe | 2,33 % |
| Zn | 6,99 % |
| Cd | 2,45 % |

Nach der Filtration des Cd-Niederschlages wies die Sumpflösung die folgenden Analysenwerte auf:

| | |
|---|---|
| P₂O₅ | 56,0 % |
| Cl | 5,4 % |
| Fe | 2,44 % |
| Zn | 7,33 % |
| Cd | 39 ppm |

Daraus errechnet sich eine Cd-Abtrennung von 99,8 %.

Die anteilige Menge an abfiltriertem filterfeuchtem Cd-Niederschlag betrug 0,87 kg/h. Der CdCl₂-Gehalt lag bei 59,0 %. Die von ausgefallenem Cd-Salz befreite Sumpflösung wurde dem Naßverfahrenssäure-Strom zugeschlagen. Der filterfeuchte Cd-Niederschlag wurde mit 0,75 kg/h Branntkalk intensiv vermischt und als trockenes Gemenge der Deponierung zugeführt.

### Beispiel 7

Bei der erfindungsgemäßen Entcadmierung einer aus Togo-Rohphosphat hergestellten Naßverfahrensphosphorsäure durch Flüssig-Flüssig-Extraktion und der anschließenden Reextraktion der organischen Phase fielen kontinuierlich 216,0 kg/h einer Cd-haltigen wäßrigen Reextraktlösung an. Der Reextrakt hatte die folgenden Analysendaten:

| | |
|---|---|
| Gesamtchlorid | 13,0 % |
| HCl | 12,6 % |
| P₂O₅ | 11,9 % |
| Fe | 0,17 % |
| Zn | 1,13 % |
| Cd | 0,22 % |

Der Reextraktstrom wurde kontinuierlich in einer zweistufigen Destillationsapparatur aufgetrennt. Die Sumpftemperatur im Umlaufverdampfer betrug 151 °C, die P₂O₅-Konzentration 54,6 %.

Während der Destillation fielen kontinuierlich folgende Mengenströme an:

| | |
|---|---|
| Sumpfablauf | 47,1 kg/h |
| HCl/H₂O-Destillat | 134,7 kg/h |
| H₂O-Destillat | 34,2 kg/h |

Die Destillate wurden zum Ansetzen frischer Reextraktlösungen verwendet.

Die konzentrierte Sumpflösung wurde kontinuierlich in einer Vorlage gesammelt und unter Rühren auf 20°C abgekühlt. Die Abtrennung der ausgeschiedenen CdCl₂-Kristalle erfolgte chargenweise mit Hilfe einer Filterpresse. Vor der Filtration hatte die Suspension die folgenden Analysenwerte:

| | |
|---|---|
| P₂O₅ | 54,6 % |
| Cl | 3,50 % |
| Fe | 0,78 % |
| Zn | 5,18 % |
| Cd | 1,01 % |

Nach der Abtrennung des Cd-Niederschlages wies die Analyse folgende Werte aus:

| | |
|---|---|
| P₂O₅ | 55,9 % |
| Cl | 2,93 % |
| Fe | 0,80 % |
| Zn | 5,30 % |
| Cd | 49 ppm |

Daraus errechnet sich eine Cd-Abtrennung von 99,5 %.

Die anteilige Menge des abfiltrierten filterfeuchten Niederschlags betrug 1,12 kg/h. Der CdCl₂-Gehalt lag bei 42,3 %. Die von ausgefallenem Cd-Salz befreite Sumpflösung wurde dem Rohphosphorsäurestrom für die Extraktion zugeschlagen. Der filterfeuchte Niederschlag wurde mit 1,0 kg/h Branntkalk intensiv vermischt und als trockenes Gemenge der Deponierung zugeführt.

### Beispiel 8

Bei der erfindungsgemäßen Entcadmierung einer aus geglühtem North-Carolina-Rohphosphoat hergestellten Naßverfahrensphosphorsäure durch Flüssig-Flüssig-Extraktion und der anschließenden Reextraktion der organischen Phase fielen 264 kg/h eines Cd-haltigen Reextraktstromes an, der die folgenden Analysenwerte aufwies:

| | |
|---|---|
| Gesamtchlorid | 13,5 % |
| HCl | 13,5 % |
| P₂O₅ | 4,90 % |
| Fe | 0,13 % |
| Zn | 1,50 % |
| Cd | 0,20 % |

Der wäßrige Reextraktstrom wurde kontinuierlich in einer zweistufigen Destillationsapparatur aufgetrennt. Die Sumpftemperatur im Umlaufverdampfer betrug 147 °C, die P₂O₅-Konzentration 50,8 %.

Während der Destillation fielen kontinuierlich folgende Mengenströme an:

| | |
|---|---|
| Sumpfablauf | 25,5 kg/h |
| HCl/H₂O-Destillat | 174,1 kg/h |
| H₂O-Destillat | 64,4 kg/h |

Die Destillate werden zum Ansetzen von frischer Reextraktlösung verwendet.

Die kontinuierlich anfallende Sumpflösung wurde in einer Vorlage gesammelt und unter Rühren auf ca. 20°C abgekühlt. Die Abtrennung des resultierenden CdCl₂-Niederschlages erfolgte chargenweise mit Hilfe einer Filterpresse. Vor der Filtration hatte die Suspension die folgenden Analysenwerte:

| | |
|---|---|
| P₂O₅ | 50,8 % |
| Cl | 5,8 % |
| Fe | 1,35 % |
| Zn | 15,6 % |
| Cd | 2,07 % |

Nach der Abtrennung des Cd-Niederschlages wies die Sumpflösung die folgende Analyse auf:

| | |
|---|---|
| P₂O₅ | 52,6 % |
| Cl | 4,60 % |
| Fe | 1,40 % |
| Zn | 16,12 % |
| Cd | 60 ppm |

Daraus errechnet sich eine Cd-Abtrennung von 99,7 %.

Die anteilige Menge des abfiltrierten filterfeuchten Cd-Niederschlags betrug 2,58 kg/h, wobei der CdCl₂-Gehalt bei 33,4 % lag. Der filterfeuchte Niederschlag wurde mit 2,0 kg Branntkalk intensiv vermischt und als trockenes Gemenge der Deponierung zugeführt. Die von ausgefallener Cd-Verbindung befreite Sumpflösung wurde dem Rohphosphorsäurestrom zugeschlagen.

## Patentansprüche

1. Verfahren zum Entfernen von Cadmium-Ionen aus Naßverfahrensphosphorsäure durch Flüssig-Flüssig-Extraktion, bei dem man die Naßverfahrensphosphorsäure mit mindestens einem in einem mit Wasser, wäßrigen Salzslösungen und wäßrigen Säuren nicht mischbaren organischen Lösungsmittel vorliegenden Salz, das aus Salzen organischer primärer, sekundärer und tertiärer Amine und quaternären Ammoniumsalzen ausgewählt ist, in Kontakt bringt, die die extrahierten Cadmium-Ionen enthaltende organische Lösungsmittelphase von der Naßverfahrensphosphorsäure abtrennt und darauf gegebenenfalls die extrahierten Cadmium-Ionen mit einer sauren wäßrigen Lösung aus der isolierten organischen Phase reextrahiert, gegebenenfalls gefolgt von einer Aufarbeitung der resultierenden, mit Cadmium-Ionen beladenen sauren wäßriger Reextraktlösung, **dadurch gekennzeichnet,** daß es sich bei den obigen Amin- bzw. Ammoniumsalzen um solche handelt, die als Anionen Chlorokomplexe eines oder mehrerer von Cadmium verschiedener mehrwertiger Metalle aufweisen.

2. Verfahren nach Anspruch 1, dadurch gekennzeichnet, daß die zur Reextraktion verwendete saure wäßrige Lösung anionische Chlorokomplexe eines oder mehrerer von Cadmium verschiedener mehrwertiger Metalle enthält und die organische Lösungsmittelphase nach der Reextraktion gegebenenfalls zum Extraktionsverfahren zurückgeführt wird.

3. Verfahren nach einem der Ansprüche 1 und 2, dadurch gekennzeichnet, daß es sich bei den Chlorokomplexen der mehrwertigen Metalle um solche von Eisen(III) und/oder von Zink(II) handelt.

4. Verfahren nach irgendeinem Anspruch der Ansprüche 2 und 3, dadurch gekennzeichnet, daß die bei der Reextraktion in der wäßrigen Lösung verwendeten Chlorokomplexe dieselben sind wie die bei der Extraktion in dem organischen Lösungsmittel verwendeten Chlorokomplexe.

5. Verfahren nach irgendeinem der Ansprüche 1 bis 4, dadurch gekennzeichnet, daß die Amin- bzw. Ammoniumkationen Kohlenwasserstoffreste mit 1 bis 30, vorzugsweise 1 bis 18 Kohlenstoffatomen, die gleich oder verschieden lang sein können, aufweisen.

6. Verfahren nach Anspruch 5, dadurch gekennzeichnet, daß es sich bei den Kohlenwasserstoffresten um Alkyl-und/oder Aralkylreste handelt und vorzugsweise mindestens einer der an das Stickstoffatom gebundenen Reste mindestens 6, insbesondere mindestens 8, Kohlenstoffatome aufweist.

7. Verfahren nach irgendeinem der Ansprüche 1 bis 6, dadurch gekennzeichnet, daß die saure wäßrige Lösung zur Reextraktion der Cadmium-Ionen aus der organischen Phase einen Gesamt-Chloridgehalt von 2 bis 58, vorzugsweise 3 bis 40 Gew.-%, hat.

8. Verfahren nach irgendeinem der Ansprüche 1 bis 7, dadurch gekennzeichnet, daß die saure wäßrige Lösung zur Reextraktion der Cadmium-Ionen aus der organischen Phase einen Gehalt an Chlorwasserstoffsäure von 2 bis 32 Gew.-% hat.

9. Verfahren nach irgendeinem der Ansprüche 1 bis 8, dadurch gekennzeichnet, daß die saure wäßrige Lösung zur Reextraktion der Cadmium-Ionen aus der organischen Phase
a) einen Eisen-Ionen-Gehalt von 0,01 bis 24 Gew.-%, vorzugsweise 0,05 bis 10 Gew.-%, oder
b) einen Zink-Ionen-Gehalt von 0,01 bis 38 Gew.-%, vorzugsweise 0,05 bis 10 Gew.-%, oder
c) einen Eisen-Ionen-Gehalt und einen Zink-Ionen-Gehalt von jeweils 0,01 bis 8 Gew.-%, vorzugsweise jeweils 0,05 bis 4 Gew.-%, aufweist.

10. Verfahren nach irgendeinem der Ansprüche 2 bis 9, dadurch gekennzeichnet, daß man aus der nach der Reextraktion anfallenden sauren, mit Cadmium beladenen wäßrigen Lösung die freie Salzsäure durch physikalische Trennverfahren weitgehend entfernt und gegebenenfalls zur Extraktions- und/oder Reextraktionsstufe zurückführt, die verbleibende Lösung aufkonzentriert und danach gegebenenfalls abkühlt, den resultierenden Cadmium-haltigen Niederschlag abtrennt und das Filtrat gegebenenfalls der zu entcadmierenden Rohphosphorsäure zusetzt.

11. Verfahren nach Anspruch 10, dadurch gekennzeichnet, daß die Entfernung der Salzsäure durch Destillation erfolgt.

12. Verfahren nach irgendeinem der Ansprüche 10 und 11, dadurch gekennzeichnet, daß 80 bis 100 Gew.-%, vorzugsweise 95 bis 100 Gew.-%, der in der sauren wäßrigen Lösung ursprünglich vorhandenen Salzsäure entfernt werden.

13. Verfahren nach irgendeinem der Ansprüche 10 bis 12, dadurch gekennzeichnet, daß die Salzsäure mit Hilfe einer vorzugsweise mehrstufigen, insbesondere zweistufigen, Destillation in Form eines azeotropen HCl/H₂O-Gemisches entfernt wird.

14. Verfahren nach irgendeinem der Ansprüche 10 bis 13, dadurch gekennzeichnet, daß die nach der Entfernung der Salzsäure verbleibende Lösung bis zu einer P₂O₅-Konzentration von 40 bis 60 Gew.-%, vorzugsweise 45 bis 57 Gew.-%, und/oder einer Chlorid-Ionen-Konzentration von 0,5 bis 8,0 Gew.-%, vorzugsweise 1,0 bis 6,0 Gew.-%, aufkonzentriert wird.

15. Verfahren nach irgendeinem der Ansprüche 11 bis 14, dadurch gekennzeichnet, daß die Aufkonzentrierung in Verbindung mit der HCl-Destillation durchgeführt wird.

16. Verfahren nach irgendeinem der Ansprüche 11 bis 15, dadurch gekennzeichnet, daß wenigstens ein Teil der Salzsäure- und/oder Wasserdestillate zur Extraktions- und/oder Reextraktionsstufe zurückgeführt wird.

## Claims

1. Process for the removal of cadmium ions from wet process phosphoric acid by liquid-liquid extraction in which the wet process phosphoric acid is contacted with at least one salt present in an organic solvent which is immiscible with water, aqueous salt solutions and aqueous acids,which salt is selected from salts of organic primary, secondary and tertiary amines and quaternary ammonium salts, the organic solvent phase containing the extracted cadmium ions is separated from the wet process phosphoric acid, and then the extracted cadmium ions, if desired, are reextracted from the isolated organic phase with an acidic aqueous solution, if desired, followed by processing of the resulting acidic aqueous reextract solution enriched in cadmium ions, **characterized in that** the above amine and ammonium salts,resp.,are those containing as anions chlorocomplexes of one or more polyvalent metals different from cadmium.

2. Process according to claim 1, characterized in that the acidic aqueous solution used for reextraction contains anionic chlorocomplexes of one or more polyvalent metals different from cadmium and the organic solvent phase after reextraction is, if desired, recirculated to the extraction process.

3. Process according to one of claims 1 and 2, characterized in that the chlorocomplexes of polyvalent metals are those of iron(III) and/or zinc(II).

4. Process according to any one of claims 2 and 3, characterized in that the chlorocomplexes used in the aqueous solution during the reextraction are the same as the chlorocomplexes used in the organic solvent phase during the extraction.

5. Process according to any one of claims 1 to 4, characterized in that the amine and ammonium cations resp. contain hydrocarbon substituents of 1 to 30, preferably 1 to 18 carbon atoms, which substituents may have the same or different chain length.

6. Process according to claim 5, characterized in that the hydrocarbon substituents are alkyl and/or aralkyl substituents, and preferably at least one of the substituents attached to the nitrogen atom contains at least 6, especially at least 8, carbon atoms.

7. Process according to any one of claims 1 to 6, characterized in that the acidic aqueous solution for the reextraction of the cadmium ions from the organic phase has a total chloride content of 2 to 58, preferably 3 to 40, weight%.

8. Process according to any one of claims 1 to 7, characterized in that the acidic aqueous solution for the reextraction of the cadmium ions from the organic phase has a content of hydrochloric acid of 2 to 32 weight%.

9. Process according to any one of claims 1 to 8, characterzied in that the acidic aqueous solution for the reextraction of the cadmium ions from the organic phase shows:
a) a content of iron ions of 0.01 to 24 weight%, preferably of 0.05 to 10 weight%, or
b) a content of zinc ions of 0.01 to 38 weight%, preferably of 0.05 to 10 weight%, or
c) a content of iron ions and of zinc ions each of 0.01 to 8 weight%, preferably each of 0.05 to 4 weight%.

10. Process according to any one of claims 2 to 9, characterized in that from the acidic aqueous solution which is obtained after reextraction and which is enriched with cadmium the free hydrochloric acid is largely removed by physical separation methods and, if desired, recirculated to the extraction and/or reextraction stage, the remaining solution is concentrated and, if desired, cooled, the resulting cadmium-containing precipitate is removed, and the filtrate is, if desired, added to the crude phosphoric acid to be subjected to the cadmium removal.

11. Process according to claim 10, characterized in that the removal of hydrochloric acid is effected by distillation.

12. Process according to any one of claims 10 and 11, characterzed in that 80 to 100 weight%, preferably 95 to 100 weight%, of the hydrochloric acid originally present in the acidic aqueous solution are removed.

13. Process according to any one of claims 10 to 12, characterized in that the hydrochloric acid is removed as an azeotropic HCl/H₂O mixture using a preferably multistage, particularly two-stage, distillation.

14. Process according to any one of claims 10 to 13, characterized in that the solution remaining after the removal of hydrochloric acid is concentrated to have a P₂O₅-concentration of 40 to 60 weight%, preferably of 45 to 57 weight%, and/or to have a concentration of chloride ions of 0.5 to 8.0 weight%, preferably of 1.0 to 6.0 weight%.

15. Process according to any one of claims 11 to 14, characterized in that the concentration is carried out in connection with the distillation of HCl.

16. Process according to any one of claims 11 to 15, characterized in that at least part of the distillates of hydrochloric acid and/or water is recirculated to the extraction and/or reextraction stage.

## Revendications

1. Procédé d'élimination d'ions cadmium contenus dans de l'acide phosphorique préparé par voie humide, par extraction liquide-liquide, dans lequel on met l'acide phosphorique préparé par voie humide au contact d'au moins un sel existant sous forme dissoute dans un solvant organique non miscible à l'eau, aux solutions salines aqueuses et aux acides aqueux, sel choisi parmi des sels d'amines organiques primaires, secondaires et tertiaires et des sels d'ammonium quaternaire, et on sépare la phase de solvant organique contenant les ions cadmium extraits de l'acide phosphorique préparé par voie humide, procédé caractérisé en ce que les sels d'amines ou d'ammonium mentionnés ci-dessus sont des sels comportant comme anions des chloro-complexes d'un ou de plusieurs métaux polyvalents différents du cadmium.

2. Procédé selon la revendication 1, caractérisé en ce que la solution aqueuse acide utilisée pour la réextraction contient des chloro-complexes anioniques d'un ou de plusieurs métaux polyvalents différents du cadmium et la phase de solvant organique est éventuellement recyclée dans le processus d'extraction après la réextraction.

3. Procédé selon l'une quelconque des revendications 1 et 2, caractérisé en ce que les chloro-complexes de métaux polyvalents sont ceux de fer III et/ou de zinc II.

4. Procédé selon l'une quelconque des revendications 2 et 3, caractérisé en ce que les chloro-complexes utilisés dans la solution aqueuse lors de la réextraction sont les mêmes que les chloro-complexes utilisés lors de l'extraction dans le solvant organique.

5. Procédé selon l'une quelconque des revendications 1 à 4, caractérisé en ce que les cations amines et/ou les cations ammonium comportent des radicaux hydrocarbures renfermant de 1 à 30, de préférence de 1 à 18, atomes de carbone pouvant être de longueurs identiques ou différentes.

6. Procédé selon la revendication 5, caractérisé en ce que les radicaux hydrocarbures sont des radicaux alkyles et/ou des radicaux aralkyles et, de préférence, au moins l'un des radicaux liés à l'atome d'azote renferme au moins 6, notamment au moins 8, atomes de carbone.

7. Procédé selon l'une quelconque des revendications 1 à 6, caractérisé en ce que la solution aqueuse acide destinée à la réextraction des ions cadmium dans la phase organique présente une teneur totale en chlore de 2 à 58, de préférence de 3 à 40% en poids.

8. Procédé selon l'une quelconque des revendications 1 à 7, caractérisé en ce que la solution aqueuse acide destinée à la réextraction des ions cadmium dans la phase organique présente une teneur en acide chlorhydrique comprise entre 2 et 32% en poids.

9. Procédé selon l'une quelconque des revendications 1 à 8, caractérisé en ce que la solution aqueuse destinée à la réextraction des ions cadmium dans la phase organique présente:
(a) une teneur en ions fer comprise entre 0,01 et 24% en poids, de préférence 0,05 et 10% en poids; ou
(b) une teneur en ions zinc comprise entre 0,01 et 38% en poids, de préférence 0,05 et 10% en poids; ou
(c) une teneur en ions fer et une teneur en ions zinc comprise chaque fois entre 0,01 et 8% en poids, de préférence 0,05 et 4% en poids.

10. Procédé selon l'une quelconque des revendications 2 à 9, caractérisé en ce que, de la solution aqueuse acide apparaissant après la réextraction et chargée en cadmium, on élimine dans une large mesure l'acide chlorhydrique libre par un procédé de séparation physique et, le cas échéant, on la recycle à l'étape d'extraction et/ou de réextraction, on reconcentre la solution restante et, après celà, éventuellement on la refroidit, on sépare le précipité contenant du cadmium qui en résulte et, le cas échéant, on ajoute le filtrat à l'acide phosphorique brut devant être débarrassé de son cadmium.

11. Procédé selon la revendication 10, caractérisé en ce que l'élimination de l'acide chlorhydrique se fait par distillation.

12. Procédé selon l'une quelconque des revendications 10 et 11, caractérisé en ce que l'on élimine de 80 à 100% en poids, de préférence de 95 à 100% en poids, de l'acide chlorhydrique présent initialement dans la solution aqueuse acide.

13. Procédé selon l'une quelconque des revendications 10 à 12, caractérisé en ce que l'acide chlorhydrique est éliminé à l'aide d'une distillation de préférence en plusieurs étapes, notamment en deux étapes, sous la forme d'un mélange azéotrope HCl/H₂O.

14. Procédé selon l'une quelconque des revendications 10 à 13, caractérisé en ce que la solution subsistant après l'élimination de l'acide chlorhydrique est reconcentrée jusqu'à une concentration en P₂O₅ de 40 à 60% en poids, de préférence de 45 à 57% en poids, et/ou à une concentration en ions chlorures de 0,5 à 8,0% en poids, de préférence de 1,0 à 6,0% en poids.

15. Procédé selon l'une quelconque des revendications 11 à 14, caractérisé en ce que la reconcentration est effectuée en liaison avec la distillation d'HCl.

16. Procédé selon l'une quelconque des revendications 11 à 15, caractérisé en ce qu'au moins une partie des distillats d'acide chlorhydrique et/ou d'eau est recyclée vers l'étape d'extraction et/ou de réextraction.
